Europäisches Patentamt

European Patent Office

Office européen des brevets

(11) Numéro de publication : **0 373 985 B1**

# FASCICULE DE BREVET EUROPEEN

(45) Date de publication du fascicule du brevet :
**04.11.92 Bulletin 92/45**

(21) Numéro de dépôt : **89403157.4**

(22) Date de dépôt : **17.11.89**

(51) Int. Cl.⁵ : **F16L 21/02**

(54) Accouplement pour tuyau flexible à emboîtement par retournement de joint torique sur un cône de faible angle.

(30) Priorité : **17.11.88 FR 8814946**

(43) Date de publication de la demande :
**20.06.90 Bulletin 90/25**

(45) Mention de la délivrance du brevet :
**04.11.92 Bulletin 92/45**

(84) Etats contractants désignés :
**AT BE CH DE ES FR GB GR IT LI LU NL SE**

(56) Documents cités :
**CH-A- 481 341**
**FR-A- 401 302**
**FR-A- 2 596 133**
**GB-A- 760 940**
**GB-A- 1 146 652**

(73) Titulaire : **CAOUTCHOUC MANUFACTURE ET
PLASTIQUES SOCIETE ANONYME
143 bis, rue Yves Le Coz
F-78000 Versailles (FR)**

(72) Inventeur : **Bechu, Jean-Pierre
Les Poissons 20 ter, Rue de Bezons
F-92400 Courbevoie (FR)**

EP 0 373 985 B1

## Description

L'invention s'applique à la jonction par emboîtement sur un embout tubulaire rigide d'une pièce elle-même rigide et rendue solidaire d'un tuyau flexible. La liaison du tuyau flexible à cet organe de raccordement est indémontable. Il s'agit d'un procédé d'assemblage du type mâle-femelle où le système d'étanchéité est lui-même caractéristique.

Des applications multiples de tuyaux souples, qu'ils soient ou non renforcés d'une armature textile, qu'ils soient composés de matériaux thermoplastiques ou élastomériques, ont donné naissance à un grand nombre de systèmes à connexion rapide, démontables ou semi-récupérables, dans lesquels deux grandes classes peuvent être distinguées . D'une part les systèmes -le plus souvent symétriques- tels le verrouillage par baïonnette tournante, où la compression d'un joint d'étanchéité est axiale, les exemples les plus courants étant les tuyaux pour pompiers et les alimentations à air comprimé dans l'industrie ou les travaux publics. Dans de telles jonctions, le joint peut subir ou non une légère déformation en sens perpendiculaire à son écrasement principal, au cours du verrouillage.

Il existe, d'autre part, une autre classe d'accouplement entre éléments rigides habituellement appelés systèmes mâle-femelle car, dans la plupart des cas, deux éléments cylindriques ou sensiblement cylindriques viennent s'emboîter sur le même axe. Le mouvement demandé par la manoeuvre est linéaire et l'étanchéité est assurée, sauf exception, par un joint annulaire, soit torique, soit à lèvres, dont la compression -pour s'opposer à la pression du fluide transporté- est essentiellement radiale et ne peut donc se produire que par glissement sur l'une des surfaces rigides. Bien souvent portée par l'embout mâle lorsque c'est un joint torique dit "O-Ring", la surface assurant l'étanchéité glisse sur un cylindre qui entoure ledit joint et dont l'état de surface devra donc être prévu en conséquence. Un artifice de bague coulissante est suggéré par le brevet US 4 193 616 de DANA CORP , mais ne s'applique qu'à un jonc de verrouillage et non à la zone d'étanchéité.

La liaison mécanique entre les deux éléments mâle et femelle se fait alors soit par vissage, soit par encliquetage de leviers basculant dans un plan passant par l'axe, soit par d'autres moyens parmi lesquels le sertissage peut être traité de semi-récupérable. Des exemples sont donnés par les brevets FR-A-2 558 563 et FR-A-2 585 443 de RASMUSSEN ou EP 031 409 de ARMATURENFABRIK HERMANN VOSS. Tous trois diffèrent par le mode de fixation définitive du tuyau flexible à l'embout mâle, le premier revendiquant une liaison vulcanisée, les deux autres un serrage mécanique radial, l'un par épanouissement d'une douille interne, l'autre par serrage extérieur.

Par ailleurs, les deux documents GB-A-760940 de PRIDHAM et CH-A-481341 de NORM PLASTICS, prévoient l'usage d'un joint torique déformable, du type normalisé O Ring, sollicité par roulement entre une surface cylindrique, externe dans le premier, interne dans le second, et une surface conique antagoniste dont le déplacement axial relatif provoque la compression dudit joint déformable. Aucun des deux documents ne prévoit le retour du joint déformable en position d'équilibre après la manoeuvre axiale de raccordement, élément pourtant essentiel pour la durée de vie dudit joint.

L'analyse de l'art antérieur montre, à l'évidence, qu'un dispositif présentant, à la fois, un mode de fixation irréversible d'un tuyau flexible à un embout et une sécurité de l'étanchéité alliés à une grande facilité de réalisation et de montage n'est pas connu. L'invention a donc pour objectif de proposer une solution - simple dans sa réalisation - permettant de pallier aux inconvénients des solutions de l'art antérieur.

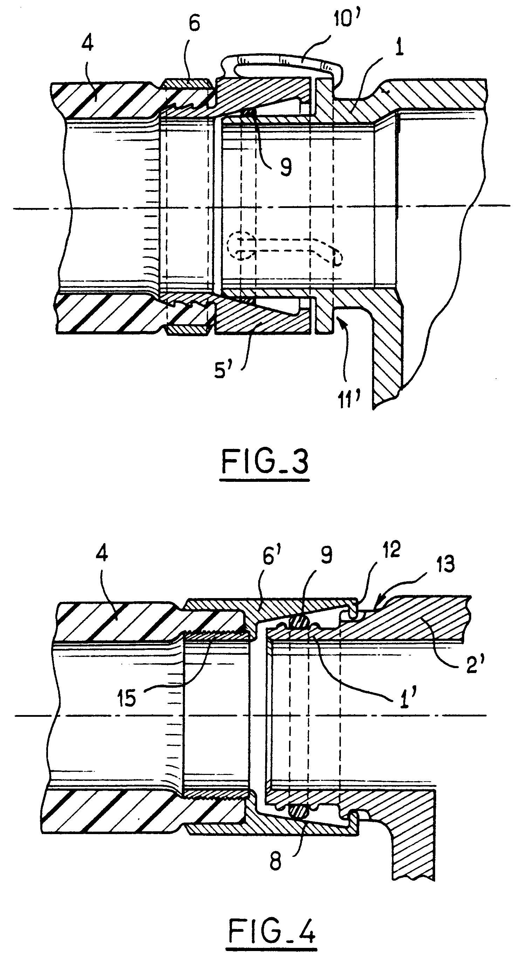

La présente invention se caractérise pour une part en ce qui concerne ce mode de fixation irréversible du tuyau flexible à l'embout mâle, par l'application du procédé décrit dans le brevet français 2 596 133 de la demanderesse. Un dispositif de raccordement de canalisation souple à une tubulure rigide par frettage dû à la contraction d'un enveloppage externe en polymère est expressément prévu par la figure 3e et sa description page 8, ledit embout devant être démontable.

Par ailleurs, l'invention revendiquée ici se prête à une amélioration de la sécurité à l'étanchéité apportée par un joint torique d'élastomère dans les dispositifs antérieurement connus, où ledit joint torique doit glisser sur une surface rigide tout en recevant dès l'entrée, grâce à un chanfrein, la contrainte radiale qui servira à assurer l'étanchéité : La pression superficielle exercée, en service par le joint sur sa surface d'appui, étant d'environ 3 fois la pression nominale dans la canalisation en raison des coefficients de sécurité usuels , la rugosité de ladite surface d'appui doit accepter un coefficient de glissement non destructif sous une pression aussi élevée. L'absence de fluide ou de lubrifiant lors du montage rend bien souvent irrécupérables les joints d'étanchéité et peut également conduire à la destruction de la surface en regard.

L'invention propose d'utiliser pour l'exécution de la fonction étanchéité un roulement exempt de glissement du joint torique, en utilisant la capacité d'un élastomère à supporter, durant de courts instants, des contraintes beaucoup plus élevées que celles exercées en service. Des valeurs de compression de dix fois la pression nominale dans la canalisation peuvent même être aisément dépassées avec des durées de manoeuvre d'emmanchement inférieures à la seconde.

Le roulement - exempt de glissement- du joint torique étant possible sur une course quelconque, une troisième particularité de l'invention réside en ce que l'accroissement progressif de la pression d'appui, grâce au rapprochement de deux parois ayant entre elles un faible angle conique, entraîne un tour complet (ou, dans certains cas, plusieurs) dudit joint torique en élastomère sur lui-même. Ainsi l'hétérogénéité passagère des contraintes dans la matière dudit joint torique, due au passage d'un diamètre supérieur à un diamètre inférieur ou réciproquement, disparait en quelques fractions de seconde par un retour dans la disposition d'origine. Les contraintes résultantes sont alors dues, essentiellement, à la réduction d'épaisseur disponible qui provoque l'ovalisation de la section du tore. Une petite réduction du diamètre primitif du joint torique provoque, en outre, une légère modification homogène desdites contraintes.

Ces trois conditions étant réunies l'invention consiste donc en un dispositif d'accouplement emboîtable pour tuyau souple formé de deux composants - un embout et un élément rigide- sur lequel est solidarisé ledit tuyau souple par frettage dû à la contraction thermique lors du refroidissement consécutif au moulage d'une bague d'enveloppage externe et comportant un joint torique, en élastomère, progressivement écrasé, au cours d'une manoeuvre axiale de raccordement, en roulant sans glissement entre une surface sensiblement cylindrique ou conique, interne à l'un des composants, et une surface en regard, conique ou sensiblement cylindrique, externe à l'autre composant.

Ledit dispositif d'accouplement est caractérisé en ce que la surface conique de l'un quelconque des composants présente un angle par rapport à l'axe compris entre six et neuf degrés, en ce que la surface sensiblement cylindrique présente un angle par rapport à l'axe compris entre zéro et trois degrés, en ce que la différence d'angle entre les deux surfaces est voisine de six degrés et en ce que ledit joint torique effectue, au cours de la manoeuvre axiale, un (ou plusiers) tour(s) complet(s) de retournement sur lui-même, l'hétérogénéité passagère des contraintes dans sa matière disparaissant par un retour dans sa position d'équilibre.

L'invention et ses variantes seront mieux comprises à la lecture de la description accompagnant les dessins, dans lesquels :

- la figure 1 représente l'usage d'un embout classique avec élément conique extérieur ;
- la figure 2 représente une combinaison à cylindre extérieur et embout conique interne ;
- la figure 3 est une application préférentielle à la fixation de durite d'eau sur un radiateur d'automobile ;
- la figure 4 combine l'élément conique extérieur avec l'enveloppage de polymère servant au frettage ;
- la figure 5 est un cas inversé par rapport à la figure 2 à embout cylindrique creux ;
- la figure 6 présente les fonctions inversées par rapport à la figure 1 à embout conique creux.

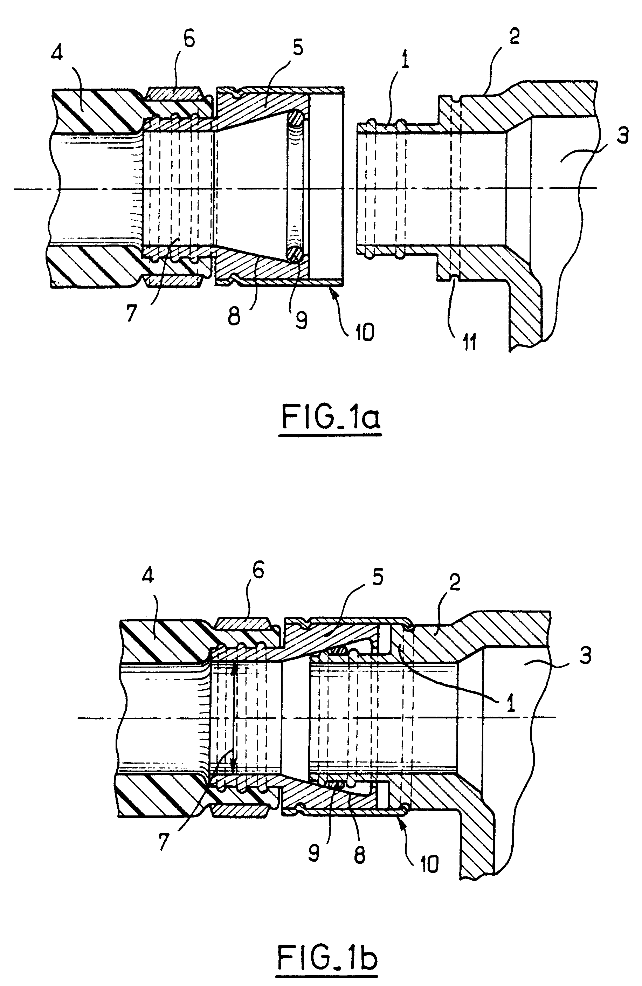

La figure 1 représente, en coupe axiale, une variante de l'invention permettant son application sur les embouts les plus classiques, constitués d'une partie cylindrique tubulaire, servant à l'emmanchement habituel d'un tuyau souple, qui a souvent le même diamètre interne que ledit embout tubulaire (1), lui-même solidaire d'une collerette (2) où vient habituellement buter le tuyau souple que l'on emmanche à force. L'embout tubulaire (1) et sa collerette (2) peuvent faire partie intégrante de la machine utilisatrice (3), pompe ou radiateur comme représenté.

Le tuyau souple (4) est, dans ce cas précis, fixé par emmanchement sur un élément rigide (5), en général de même diamètre intérieur (7) que celui dudit tuyau souple (4), un frettage étant assuré par le retrait thermique du polymère après moulage d'une bague d'enveloppage externe (6). Le procédé de réalisation et ses applications sont décrits dans le brevet FR 2 596 133 de la demanderesse.

L'élément rigide (5) présente, au-delà de son diamètre intérieur (7), une partie évasée, appelée par la suite cône de faible angle (8), dont la pente par rapport à l'axe est, par exemple 1/10e, ce qui correspond à un angle au sommet du cône de 6 degrés. A la base dudit cône, un joint torique (9), en élastomère, se trouve retenu, sous une compression faible, d'une valeur juste nécessaire, pour éviter les chutes au cours des manipulations, par un épaulement de faible hauteur.

Pour permettre un démoulage sans contre-dépouille de l'élément rigide (5), ledit épaulement peut être, avantageusement, réalisé par déformation plastique de l'extrêmité du cône de faible angle (8) après pose du joint torique (9) en élastomère dans cette zone. Selon une variante, un usinage permet de façonner ledit épaulement, compte tenu de ce que la pièce -métallique ou en plastique renforcé- doit subir un surmoulage de la bague d'enveloppage externe (6), et, par conséquent des manipulations et contraintes thermiques dans un moule.

Un tel usinage peut constituer la finition nécessaire de l'état de surface du cône de faible angle (8) resté brut pour les opérations précédentes ; le joint torique (9) en élastomère est posé par la suite.

La vue la montre la présentation devant l'embout tubulaire (1) du tuyau souple (4), monté sur l'élément rigide (5). Le dimensionnement est choisi de telle sorte que le joint torique (9) en élastomère vienne juste se poser sur le chanfrein d'entrée et le début cylindrique de l'embout tubulaire (1).

Ledit embout tubulaire (1) présente des surépaisseurs externes, de forme torique, en olive, ou éventuellement de forme crantée, en tronc de cône dans le sens facilitant l'emmanchement, terminée par une arête vive, à peu près plane, s'opposant à l'arrachement.

Ces surépaisseurs auront au maximum la moitié du diamètre choisi pour la section du joint torique (9) en élastomère.

Dès le début de la manoeuvre d'emmanchement dynamique, ledit joint torique (9) en élastomère vient buter sur la pente de la première surépaisseur et se trouve obligé à rouler, sans glisser, sur ses deux appuis, sans autre possibilité, les coefficients de frottement ne permettant pas qu'il ripe sous un faible angle. Il n'y a donc aucun intérêt à ce que les surfaces d'appui soient lubrifiées au moment du montage.

A titre d'illustration, si la pente du cône de faible angle (8) est de 1/10 et l'épaisseur du tore de 4 millimètres par exemple, un retournement complet du joint torique (9) en élastomère demande un déplacement d'environ fois ladite épaisseur, soit environ 12,6 mm, de celui-ci sur le cône, mais ledit joint torique (9) en élastomère roule, également, d'environ 12,6 mm sur l'embout tubulaire (1) et franchit, par exemple, la première surépaisseur rencontrée, pour se retrouver dans la position stable, représentée en vue 1b, sur une partie à nouveau cylindrique extérieure de l'embout tubulaire (1).

Celui-ci et l'élément rigide (5) se sont rapprochés, axialement, d'une distance égale à la somme des deux courses, c'est-à-dire voisine de 25,2 mm, dans cet exemple, et, dans le plan où se trouve le joint torique (9) en élastomère, le diamètre extérieur qui l'enserre a diminué de deux fois 1,26 mm, soit 31 % de l'épaisseur du joint torique qui est donc énergiquement comprimé.

Pour pouvoir réaliser une course en arrière, même partielle, le joint torique (9) en élastomère doit subir une compression temporaire de l'ordre de 50 % de son épaisseur. Ceci est possible, comme dans la manoeuvre de rapprochement, dans des conditions dynamiques dépassant des contraintes locales de 50 à 100 bars. De ce fait, la position du raccordement est stable et aucun verrouillage supplémentaire n'est, en principe, nécessaire. Sur la vue 1a est représenté un prolongement tubulaire (10),constitué par exemple, d'un tube métallique, serti ou solidarisé, au moulage sur l'extérieur de l'élément rigide (5), qui, après la manoeuvre de rapprochement, vient, comme représenté sur la vue 1b, coiffer une gorge (11), ménagée sur la collerette (2) solidaire de l'embout tubulaire (1) et/ou du carter de la machine utilisatrice (3), où un second sertissage est possible pour empêcher tout démontage accidentel. Ledit sertissage peut être un poinçonnage local, servant de plombage de garantie. Sa destruction, par une perceuse par exemple, permet de renouveler l'opération désassemblage-réassemblage aussi souvent que nécessaire, avec ou sans remplacement du joint torique (9) en elastomère qui subit une fatigue élevée dans la manoeuvre.

Si l'épaulement, constitué par la collerette (2) où vient buter la face avant de l'élément rigide (5), n'est pas nécessaire, la partie cylindrique de l'embout tubulaire (1) peut se poursuivre dans le prolongement dudit embout, un rapprochement supplémentaire est alors rapidement empêché par le franchissement d'une nouvelle surépaisseur sur laquelle le joint torique (9) en élastomère aurait dû rouler, du fait que son diamètre extérieur continue d'être contraint par la suite de la partie conique jusqu'au diamètre intérieur (7) de l'élément rigide (5). En l'absence de joint torique, avec les cotes adaptées à l'application, le diamètre intérieur (7) de l'élément rigide (5) viendrait en fin de course, buter sur le diamètre extérieur de l'embout tubulaire (1). En effet, le joint torique (9) en élastomère devrait être écrasé à une valeur destructive pour que l'assemblage puisse aller au delà de la position d'équilibre représentée.

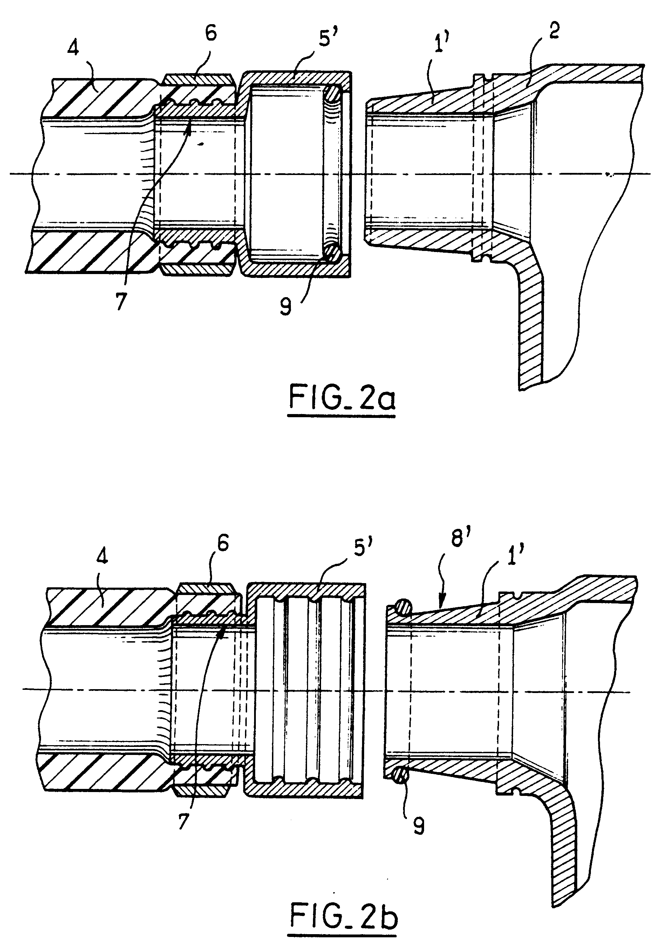

La figure 2 est une vue, également en coupe axiale, d'une combinaison inversée, utilisant les mêmes éléments, mais où la partie cylindrique de l'assemblage est un alésage extérieur porté par l'élément rigide (5'), l'embout sensiblement cylindrique (1'), interne étant ménagé pour recevoir la surface conique de faible angle (8') par rapport à l'axe.

La vue 2a est une représentation des éléments constitutifs avant emmanchement, dans la même configuration que la vue 1a. Dans la vue 2a, le tuyau souple (4) est monté sur l'élément rigide (5'),de forme cylindrique, comportant un prolongement de diamètre intérieur (7), sensiblement égal à celui dudit tuyau souple (4), le frettage étant assuré par le retrait thermique du polymère constitutif de la bague d'enveloppage externe (6).

Dans cette configuration, le joint torique (9) en élastomère est situé en position intérieure dans l'extrémité de l'élément rigide (5') où il est maintenu par une légère compression lors de sa mise en place.

L'opérateur doit donc veiller , lors de la manoeuvre d'approche, à ce que ledit joint torique (9) en élastomère demeure en place jusqu'à ce que son roulement démarre - de façon simultanée - sur les deux surfaces d'appui.

L'embout sensiblement cylindrique (1') présente une surface conique de faible angle (8'), externe, son grand diamètre se terminant par une collerette (2) solidaire de la machine utilisatrice.

L'emmanchement a pour effet d'écraser le joint torique (9) en élastomère entre la surface conique de faible angle (8') de l'embout sensiblement cylindrique (1') et la surface intérieure de l'élément rigide (5'), de forme cylindrique, ce qui entraîne son retournement, en raison des coefficients de frottements des matériaux en contact.

Dans cette disposition, le passage d'une ou de deux valeur(s) maximale(s) de réaction, lors de l'emmanchement, n'est dû qu'aux contraintes de retournement du joint torique (9) en élastomère, par exemple si le module d'Young de l'élastomère est particulièrement élevé. Cette configuration peut être utilisée si la pression du fluide est faible ou bien si elle est équilibrée par d'autres moyens mécaniques, en particulier pour des tuyaux souples sous dépression, utilisés pour les aspirateurs ou pour le transport de matériaux pulvérulents, par exemple. Un verrouillage mécanique est toujours possible par ailleurs.

En particulier, il peut être efficace pour accroître ces valeurs maximales de réaction de ménager, comme représenté en vue 2b, des surépaisseurs en forme d'olive ou de tore, ou des crantages tronconiques, sur la partie cylindrique en alésage de l'élément rigide (5′), tandis que la surface conique de faible angle (8′) sera continue et portée par l'embout sensiblement cylindrique (1′).

Dans une telle disposition, avant présentation le joint torique (9) en élastomère est posé sous légère tension à l'extérieur de l'extrémité libre de l'embout sensiblement cylindrique (1′) qui, pour en empêcher la chute, comporte un épaulement de faible épaisseur.

Après emmanchement, la disposition relative des éléments décrits sur les vues 2a et 2b ne diffère pas fondamentalement de celle illustrée sur la vue 1b.

Sur les vues 2a et 2b, il n'a pas été représenté de système de verrouillage complémentaire. Une réaction importante s'opposant au retour s'explique par les contraintes élevées que devrait subir le joint torique (9) en élastomère au franchissement des surépaisseurs éventuelles. Les cotes peuvent être choisies, avec un tore de très petite épaisseur vis-à-vis des diamètres des composants telle que 2,5 ou 3 millimètres, pour un diamètre interne de 32 millimètres, à titre d'exemple non limitatif, pour que le joint torique (9) en élastomère effectue deux tours sur lui-même, avec un premier franchissement aisé, assurant déjà une étanchéité et un second franchissement, demandant des efforts très nettement supérieurs à la poussée maximale que le fluide peut exercer à la pression nominale du circuit, garantissant une étanchéité totale.

La figure 3 représente une disposition intéressante pour la construction automobile, où une mise en place axiale du joint torique peut être automatisée sous condition d'une preuve de son positionnement correct. Cette variante est en tous points analogue à la vue 1b, en ce qui concerne le fonctionnement du joint torique en élastomère, à retournement sur un tour; le verrouillage ultérieur à l'établissement de l'étanchéité est assuré par des crochets élastiques (10′), par exemple au nombre de trois, venant en appui irréversible sur une collerette (11′), solidaire de l'embout tubulaire (1) et retenant ces crochets par un épaulement plan, selon une disposition connue de l'art antérieur.

Le mouvement desdits crochets (10′) s'ouvrant au passage de ladite collerette (11′) et se refermant derrière elle, est plus commodément décelable par un dispositif d'assemblage automatique et constitue une garantie du bon fonctionnement de l'étanchéité.

L'ouverture simultanée desdits crochets, en cas de besoin est une opération qui ne peut être que volontaire, en raison de la valeur de l'effort axial, beaucoup plus élevé que dans les dispositifs antérieurement connus, et nécessaire pour le retrait du joint torique.

Les réactions dues à la pression du fluide sont, dans cette variante, équilibrées par la tenue des crochets élastiques (10′), par exemple venus de moulage lors de la fabrication de l'élément rigide (5′), réalisés à base de matière plastique technique ou, éventuellement, de matière thermodurcissable. Cette pièce doit en effet subir le cycle thermique et mécanique de surmoulage de la bague d'enveloppage externe (6), dont le refroidissement assure le frettage du tuyau souple (4) sur la partie cylindrique de l'élément rigide (5′).

La figure 4 montre une disposition géométrique, possible lorsque le fabricant maîtrise bien les déformations thermiques des composants dans l'opération de frettage. L'élément rigide de raccordement est formé de l'ensemble constitué d'une bague rigide (15), simple tronçon de tube métallique par exemple, solidarisée lors du surmoulage de la bague d'enveloppage (6′) avec le cône de faible angle (8) qui en est partie intégrante. Le retrait de la partie tubulaire entourant le tuyau souple (4) assure le frettage dudit tuyau et doit être bien maîtrisé au cours du moulage pour respecter la forme dudit cône de faible angle (8).

L'embout sensiblement cylindrique (1′) de même définition géométrique que l'embout tubulaire (1) de la figure 1, présente, à titre de variante, un dispositif de verrouillage à baïonnette représenté par les rainures (13), ménagées dans la collerette (2′) où viennent s'engager des ergots (12), disposés au bout de la bague d'enveloppage externe (6′) et du cône de faible angle (8).

Au nombre de quatre par exemple, lesdits ergots (12) ne doivent exiger qu'une faible précision du fait des déformations au refroidissement de la matière frettant le tuyau souple (4), ce qu'un dispositif à baïonnette admet aisément. L'opération de mise en place d'un tel dispositif à baïonnette conduit à la plus grande sécurité lorsque, à la mise en contact du joint torique (9) en élastomère avec le cône de faible angle (8), les ergots (12) sont alignés avec la position verrouillée dans les rainures (13).

En effet, l'enfoncement qui succède à cette mise en contact doit s'exécuter avec un mouvement de torsion hélicoïdale, - ce que la déformabilité du joint torique (9) en élastomère permet, par cisaillement d'ensemble - ; il est suivi d'une rotation assurant le verrouillage en fin de course, position dans laquelle les contraintes élastiques circonférencielles qui s'exercent sur le joint torique (9) en élastomère retrouvent un équilibre.

Il n'en serait pas de même si l'enfoncement était pratiqué de façon rectiligne, les ergots (12) étant alignés avec la position ouverte des rainures (13), car, après verrouillage, les contraintes élastiques circonférencielles sur le joint torique (9) en élastomère provoqueraient un rappel élastique tendant à l'ouverture du dispositif.

Par ce moyen, le verrouillage peut être aussi énergique que nécessaire et demander des efforts dépassant largement les sollicitations accidentelles en service. Un plombage, un poinçonnage ou une soudure locale peut compléter néanmoins, ledit verrouillage, pour des raisons de garantie, en laissant une trace lors de tout essai de démontage.

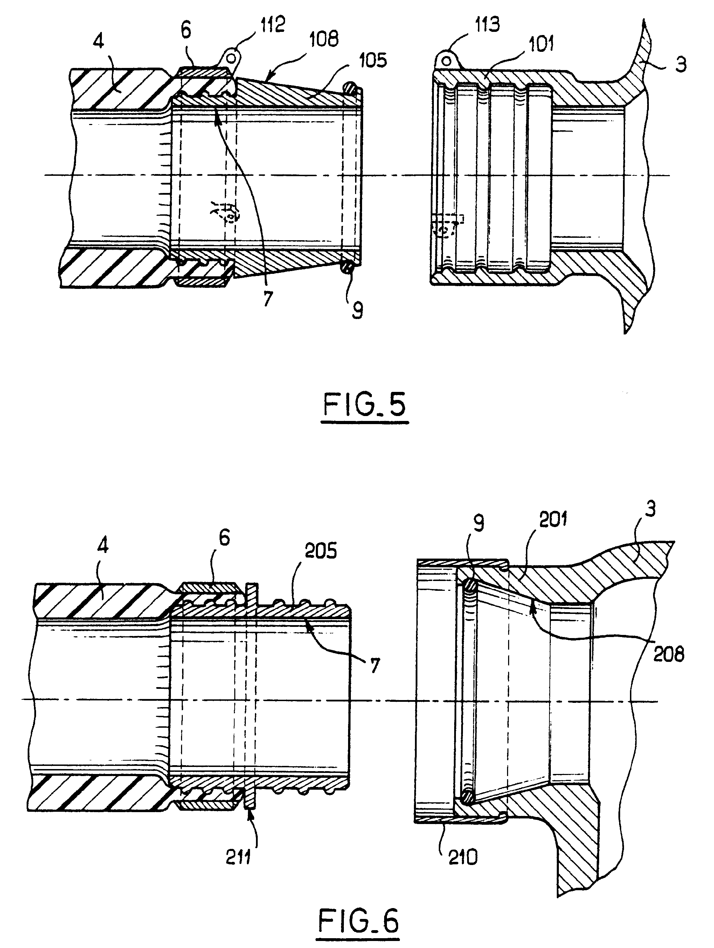

La figure 5 prévoit un cas inversé des fonctions remplies, sur la figure 2, par les faces sensiblement cylindrique interne et conique de faible angle externe.

Le tuyau souple (4) est solidarisé sur un élément rigide (105) de même diamètre intérieur (7) que celui dudit tuyau souple, par frettage d'une bague d'enveloppage externe (6).

Ledit élément rigide (105) comporte une surface conique de faible angle (108), extérieure, ce qui permet de constituer un épaulement où vient buter le tuyau souple (4) avant assemblage. Le joint torique (9) en élastomère est posé sous légère tension à l'extrêmité libre de l'élément rigide (105), où un épaulement de faible épaisseur empêche sa chute lors des manutentions.

L'embout (101), solidaire de la machine utilisatrice (3), pompe ou radiateur, présente un alésage sensiblement cylindrique, muni ou non de surépaisseurs, olives ou crantages, pour assurer une discontinuité dans l'écrasement du joint torique (9) en élastomère, lors de la manoeuvre axiale. Le reste de l'assemblage est identique aux descriptions précédentes. Dans la variante décrite, sont prévus pour la fixation servant de plombage en position de fonctionnement, un bossage (112), porté par la bague d'enveloppage externe (6) et un bossage (113) analogue, porté par l'embout (101), soudé lorsque les composants sont métalliques ou bien venu de moulage lorsque les composants sont réalisés en plastique renforcé. Au nombre de un, deux ou trois, lesdits bossages (112) et (113) peuvent porter un trou servant à passer un fil de plombage, ou bien une vis, ou bien un rivet, ou tout système mettant en évidence une tentative de démontage.

La figure 6 présente les mêmes fonctions, inversées par rapport à la vue 1a. Le tuyau souple (4) est solidarisé sur un élément rigide (205), de même diamètre intérieur (7) que celui dudit tuyau souple (4), par frettage d'une bague d'enveloppage externe (6).

Ledit élément rigide (205) comporte une surface externe sensiblement cylindrique, sur laquelle sont représentées des surépaisseurs, olives ou crantages prévus pour la surface d'appui du joint torique (9) en élastomère qui peuvent être identiques ou différents de ceux prévus pour la mise en place par frettage du tuyau souple (4). Une collerette (211), solidaire ou non de l'élément rigide (205) assure la butée dudit tuyau souple (4) lors de l'assemblage préliminaire. L'embout (201), solidaire de la machine utilisatrice (3), présente en alésage, un cône de faible angle (208) par rapport à son axe, sur lequel il sera commode de retenir le joint torique (9) en élastomère posé sous légère compression, par un épaulement de faible épaisseur qui empêche sa chute au cours des manutentions. Ledit épaulement peut venir d'usinage ou de déformation plastique après pose du joint.

Dans cette variante est représentée une collerette de verrouillage (210) destinée au maintien de l'assemblage, par un sertissage - partiel ou de révolution- par dessus la collerette (211) de l'élément rigide (205) qu'elle chevauche après l'assemblage. Pour garantir l'étanchéité après retournement du joint torique (9) en élastomère, il n'est pas nécessaire, dans cette configuration, que l'embout (201) vienne en butée sur la collerette (211), mais seulement qu'un verrouillage interdise l'écartement de ces deux éléments. Le terme de sensiblement cylindrique pour désigner une surface munie ou non de surépaisseurs, olives ou crantage, peut être utilisé tant que la surface moyenne de ce solide est un cône d'angle par rapport à l'axe compris entre zéro et trois degrés, donc d'angle au sommet compris entre zéro et six degrés. De même, le terme de cône de faible angle, interne ou externe, est utilisé pour un cône d'angle par rapport à l'axe au compris entre six et neuf degrés, donc d'angle au sommet compris entre douze et dix huit degrés. Seule est d'importance la différence d'angle entre ces deux surfaces, proche de six degrés, qui permet la compression progressive du joint torique lors du rapprochement axial des deux solides, au taux d'un dizième de la course axiale.

En résumé, les différentes variantes du dispositif d'assemblage objet de l'invention, qui peuvent être considérées isolément ou en combinaison de leurs constituants, permettent d'exercer des efforts importants sur un joint d'étanchéité, sans exigence particulière pour l'état de surface des solides en regard. De ce fait, les précisions géométriques demandées sont beaucoup moins sévères que ne l'exigaient les procédés antérieurs, ce qui permet des modes de fabrication plus économiques. L'interchangeabilité, ainsi que l'automatisation de l'assemblage s'en trouvent favorisés, le joint torique étant disponible dans le commerce.

**Revendications**

1. Dispositif d'accouplement emboîtable pour tuyau souple (4) formé de deux composants soit
   - a) un embout (1), (1'), (101) ou (201) et
   - b) un élément rigide (5), (5'), (105) ou (205), sur lequel est solidarisé ledit tuyau souple (4), par frettage - dû à la contraction thermique, lors du refroidissement consécutif au moulage d'une bague d'enveloppage externe (6) ou (6') -, comportant un joint torique (9), en élastomère, progressivement écrasé, au cours d'une manoeuvre axiale de raccordement, en roulant sans glissement entre une surface sensiblement cylindrique ou conique, interne à l'un des composants, et une surface en regard, conique ou sensiblement cylindrique, externe à l'autre composant, ledit dispositif d'accouplement étant caractérisé en ce que la surface conique de l'un quelconque des composants présente un angle par rapport à l'axe compris entre six et neuf degrés, en ce que la surface sensiblement cylindrique présente un angle par rapport à l'axe compris entre zéro et trois degrés, en ce que la différence d'angle entre ces deux surfaces est voisine de six degrés et en ce que ledit joint torique (9) effectue, au cours de la manoeuvre axiale, un (ou plusieurs) tour(s) complet(s) de retournement sur lui-même, l'hétérogénéité passagère des contraintes dans sa matière disparaissant par un retour dans sa position d'origine.

2. Dispositif d'accouplement emboîtable selon la revendication 1, caractérisé en ce que l'embout tubulaire (1) présente une surface externe sensiblement cylindrique et que l'élément rigide (5) présente une surface interne en forme de cône de faible angle (8), la surface externe dudit embout tubulaire (1) pouvant être ou non munie de surépaisseurs, en forme d'olives, de tores ou de crantages, que franchit éventuellement ledit joint torique (9), au cours de son roulement.

3. Dispositif d'accouplement emboîtable selon la revendication 1, caractérisé en ce que l'embout sensiblement cylindrique (1') présente une surface externe conique de faible angle (8') et que l'élément rigide (5') présente une surface interne sensiblement cylindrique pouvant être ou non munie de surépaisseurs, en forme d'olives, de tores ou de crantages, que franchit éventuellement ledit joint torique (9) au cours de son roulement.

4. Dispositif d'accouplement emboîtable selon la revendication 1, caractérisé en ce que l'embout tubulaire (101) présente une surface interne sensiblement cylindrique et que l'élément rigide (105) présente une surface externe conique de faible angle (108), la surface interne dudit embout tubulaire (101) pouvant être ou non munie de surépaisseurs, en forme d'olives, de tores ou de crantages, que franchit éventuellement ledit joint torique (9) au cours de son roulement.

5. Dispositif d'accouplement emboîtable selon la revendication 1, caractérisé en ce que l'embout sensiblement cylindrique (201) présente une surface interne en forme de cône de faible angle (208) et que l'élément rigide (205) présente une surface externe sensiblement cylindrique pouvant être ou non munie de surépaisseurs telles que olives ou crantages.

6. Dispositif d'accouplement emboîtable selon l'une des revendications 1 à 5, caractérisé en ce que les surfaces externes sensiblement cylindriques de l'embout tubulaire (1) et de l'élément rigide (205) et les surfaces internes sensiblement cylindriques de l'élément rigide (5') et de l'embout tubulaire (101) présentent un angle moyen par rapport à leur axe compris entre zéro et trois degrés, donc d'angle au sommet compris entre zéro et six degrés, alors que les cônes de faible angle (8) interne à l'élément rigide (5) ou (208) interne à l'embout sensiblement cylindrique (201) et les surfaces coniques de faible angle (8'), externe à l'embout sensiblement cylindrique (1'), ou (108) externe à l'élément rigide (105) présentent un angle par rapport à l'axe compris entre six et neuf degrés, donc un angle au sommet compris entre douze et dix huit degrés.

7. Dispositif d'accouplement emboîtable selon l'une des revendications 1 à 6, caractérisé en ce que les deux composants sont rendus solidaires, après la manoeuvre axiale provoquant le retournement du joint torique (9) par un moyen de verrouillage démontable.

8. Dispositif d'accouplement emboîtable selon la revendication 7, caractérisé en ce que ledit moyen de verrouillage démontable est constitué par des crochets élastiques (10') engagés sur une collerette (11') ou par un système du type à baïonnette formé d'ergots (12) engagés dans des rainures (13).

9. Dispositif d'accouplement emboîtable selon la revendication 7, caractérisé en ce que ledit moyen de verrouillage permet la mise en évidence d'une tentative de démontage et est constitué soit de bossages associés (112) et (113) soit d'une collerette de verrouillage (210) sertie sur une collerette (211) ou d'un prolongement tubulaire (10) serti dans une gorge (11).

**Patentansprüche**

1. Anordnung zum steckbaren Kuppeln eines flexiblen Schlauches (4), die aus zwei Bestandteilen gebildet ist, nämlich
   -a) einem Ansatzstück (1), (1'), (101) oder (201) und

-b) einem starren Element (5), (5'), (105) oder (205), auf dem der flexible Schlauch (4) durch Umschnürung - infolge thermischer Kontraktion eines äußeren Umfangsringes (6) oder (6') beim Abkühlen nach dessen Formung - festgelegt ist,

mit einem torusförmigen Dichtungselement (9) aus Elastomer, das im Laufe einer axialen Bewegung zur Verbindung zunehmend zusammengedrückt wird, indem es zwischen einer im wesentlichen zylindrischen oder konischen inneren Oberfläche an einem der Bestandteile und einer konischen oder im wesentlichen zylindrischen äußeren Gegenoberfläche an dem anderen Bestandteil ohne Rutschen rollt,

wobei die Anordnung zum Kuppeln **dadurch gekennzeichnet** ist, daß die konische Oberfläche des einen der Bestandteile einen Winkel gegenüber der Achse zwischen sechs und neun Grad aufweist, daß die im wesentlichen zylindrische Oberfläche einen Winkel gegenüber der Achse zwischen null und drei Grad aufweist, daß die Winkeldifferenz zwischen den beiden Oberflächen nahe bei sechs Grad ist, und daß das torusförmige Dichtungselement (9) im Laufe der axialen Bewegung eine (oder mehrere) vollständige Umdrehung(en) um sich selbst ausführt, wobei die vorübergehende Ungleichmäßigkeit der Spannungen in seinem Material durch Rückkehr in seine ursprüngliche Stellung verschwindet.

2. Anordnung zum steckbaren Kuppeln nach Anspruch 1, **dadurch gekennzeichnet,** daß das röhrenförmige Ansatzstück (1) eine im wesentlichen zylindrische äußere Oberfläche aufweist, und daß das starre Element (5) eine innere Oberfläche in Form eines Konus mit kleinem Winkel (8) aufweist, wobei die äußere Oberfläche des röhrenförmigen Ansatzstückes (1) mit oder ohne Verdickungen in Form von Oliven, Wülsten oder Rasten versehen sein kann, die das torusförmige Dichtungselement (9) bei seiner Rollbewegung gegebenenfalls überrollt.

3. Anordnung zum steckbaren Kuppeln nach Anspruch 1, **dadurch gekennzeichnet,** daß das im wesentlichen zylindrische Ansatzstück (1') eine konische äußere Oberfläche (8') mit kleinem Winkel aufweist, und daß das starre Element (5') eine im wesentlichen zylindrische innere Oberfläche aufweist, die mit oder ohne Verdickungen in Form von Oliven, Wülsten oder Rasten versehen sein kann, die das torusförmige Dichtungselement (9) bei seiner Rollbewegung gegebenenfalls überrollt.

4. Anordnung zum steckbaren Kuppeln nach Anspruch 1, **dadurch gekennzeichnet,** daß das röhrenförmige Ansatzstück (101) eine im wesentlichen zylindrische innere Oberfläche aufweist, und daß das starre Element (105) eine konische äußere Oberfläche mit kleinem Winkel (108) aufweist, wobei die innere Oberfläche des röhrenförmigen Ansatzstücks (101) mit oder ohne Verdickungen in Form von Oliven, Wülsten oder Rasten versehen sein kann, die das torusförmige Dichtungselement (9) bei seiner Rollbewegung gegebenenfalls überrollt.

5. Anordnung zum steckbaren Kuppeln nach Anspruch 1, **dadurch gekennzeichnet,** daß das im wesentlichen zylindrische Ansatzstück (201) eine innere Oberfläche in Form eines Konus mit kleinem Winkel (208) aufweist, und daß das starre Element (205) eine im wesentlichen zylindrische äußere Oberfläche aufweist, die mit oder ohne Verdickungen wie Oliven oder Rasten versehen sein kann.

6. Anordnung zum steckbaren Kuppeln nach einem der Ansprüche 1 bis 5, **dadurch gekennzeichnet,** daß die im wesentlichen zylindrischen äußeren Oberflächen des röhrenförmigen Ansatzstücks (1) und des starren Elements (205) und die im wesentlichen zylindrischen inneren Oberflächen des starren Elements (5') und des röhrenförmigen Ansatzstücks (101) einen mittleren Winkel bezüglich ihrer Achse zwischen null und drei Grad aufweisen, also einen Scheitelwinkel zwischen null und sechs Grad, während die konischen Flächen (8) mit kleinem Winkel im Inneren des starren Elements (5) oder (208) im Inneren des im wesentlichen zylindrischen Ansatzstücks (201) und die konischen Oberflächen (8') mit kleinem Winkel außen an dem im wesentlichen zylindrischen Ansatzstück (1') oder (108) außen an dem starren Element (105) einen Winkel bezüglich der Achse zwischen sechs und neun Grad, also einen Scheitelwinkel zwischen zwölf und achtzehn Grad aufweisen.

7. Anordnung zum steckbaren Kuppeln nach einem der Ansprüche 1 bis 6, **dadurch gekennzeichnet,** daß die beiden Bestandteile nach der die Umdrehung des torusförmigen Dichtungselements (9) hervorrufenden axialen Bewegung durch ein demontierbares Verriegelungsmittel fest miteinander verbunden sind.

8. Anordnung zum steckbaren Kuppeln nach Anspruch 7, **dadurch gekennzeichnet,** daß das demontierbare Verriegelungsmittel durch elastische Hakenteile (10') gebildet ist, die in einen Bund (11') eingreifen, oder durch ein aus in Nuten (13) eingreifende Nocken (12) gebildetes bajonettartiges System.

9. Anordnung zum steckbaren Kuppeln nach Anspruch 7, **dadurch gekennzeichnet,** daß das Verriegelungsmittel einen Versuch der Demontage erkennbar macht und entweder aus miteinander verbundenen Ösen (112) und (113), oder aus einer auf einen Kragen (211) aufgepreßten Verriegelungstülle (210) oder aus einer auf eine Hohlkehle (11) aufgepreßten röhrenförmigen Verlängerung (10) gebildet ist.

**Claims**

1. Interlockable coupling device for flexible tube (4) formed from two components, namely
   -a) a nipple (1), (1'), (101) or (201) and
   -b) a rigid element (5), (5'), (105) or (205), to which said flexible tube (4) is rigidly connected, by wire binding - due to thermal contraction, during cooling following the moulding of an outer casing ring (6) or (6')-, comprising an O-ring (9) made of elastomer which is progressively compressed during an axial connecting operation by rolling without sliding between a substantially cylindrical or conical surface internal to one of the components, and a conical or substantially cylindrical surface opposite, external to the other component, said coupling device being characterised in that the conical surface of either of the components has an angle of between six and nine degrees relative to the axis, in that the substantially cylindrical surface has an angle of between zero and three degrees relative to the axis, in that the difference in angle between these two surfaces is close to six degrees and in that said O-ring (9) performs, during the axial operation, one (or more) complete turn(s) on itself, the temporary heterogeneity of stresses in its material disappearing by return to its original position.

2. Interlockable coupling device according to claim 1, characterised in that the tubular nipple (1) has a substantially cylindrical outer surface and in that the rigid element (5) has an inner surface in the form of a low-angled cone (8), wherein the outer surface of said tubular nipple (1) may or may not be provided with projections in the form of bulbous portions, tori or notches which, if occasion arises, said O-ring (9) crosses during rolling thereof.

3. Interlockable coupling device according to claim 1, characterised in that the substantially cylindrical nipple (1') has a low-angled conical outer surface (8') and in that the rigid element (5') has a substantially cylindrical inner surface which may or may not be provided with projections in the form of bulbous portions, tori or notches which, if occasion arises, said O-ring (9) crosses during rolling thereof.

4. Interlockable coupling device according to claim 1, characterised in that the tubular nipple (101) has a substantially cylindrical inner surface and in that the rigid element (105) has a low-angled conical outer surface (108), wherein the inner surface of said tubular nipple (101) may or may not be provided with projections in the form of bulbous portions, tori or notches which, if occasion arises, said O-ring (9) crosses during rolling thereof.

5. Interlockable coupling device according to claim 1, characterised in that the substantially cylindrical nipple (201) has an inner surface in the form of a low-angled cone (208) and in that the rigid element (205) has a substantially cylindrical outer surface which may or may not be provided with projections such as bulbous portions or notches.

6. Interlockable coupling device according to any of claims 1 to 5, characterised in that the substantially cylindrical outer surfaces of the tubular nipple (1) and of the rigid element (205) and the substantially cylindrical inner surfaces of the rigid element (5') and of the tubular nipple (101) have a mean angle of between zero and three degrees relative to their axis, and therefore an apical angle of between zero and six degrees, while the low-angled cones (8) internal to the rigid element (5) or (208) internal to the substantially cylindrical nipple (201) and the low-angled conical surfaces (8') external to the substantially cylindrical nipple (1'), or (108) external to the rigid element (105) have an angle of between six and nine degrees relative to the axis, and therefore an apical angle of between twelve and eighteen degrees.

7. Interlockable coupling device according to any of claims 1 to 6, characterised in that the two components are rigidly connected, after axial operation causing turning of the O-ring (9), by a dismountable locking means.

8. Interlockable coupling device according to claim 7, characterised in that said dismountable locking means consists of elastic hooks (10') engaged on a collar (11') or of a bayonet-type system composed of lugs (12) engaged in grooves (13).

9. Interlockable coupling device according to claim 7, characterised in that said locking means allows revelation of an attempt at dismounting and consists either of associated bosses (112) and (113) or of a locking collar (210) set on a collar (211) or of a tubular extension (10) set in a groove (11).

FIG.1a

FIG.1b

11

FIG. 2a

FIG. 2b

FIG_3

FIG_4

FIG. 5

FIG. 6